# EUROPEAN PATENT APPLICATION

(11) **EP 4 325 709 A1**
(43) Date of publication of application: **21.02.2024**
(21) Application number: 21940227.8
(22) Date of filing: 21.05.2021
(51) Int. Cl.: H02M 7/00, H02M 7/217, H02M 7/797, H02M 3/335

(54) **ALTERNATING CURRENT/DIRECT CURRENT POWER CONVERSION SYSTEM**

(71) Applicant: Huawei Technologies Co., Ltd., Longgang Shenzhen, Guangdong 518129 (CN)
(72) Inventor: SHUAI, Peng, Shenzhen, Guangdong 518129 (CN); ZHANG, Zelong, Shenzhen, Guangdong 518129 (CN); HUANG, Zhuyong, Shenzhen, Guangdong 518129 (CN)
(74) Representative: Gill Jennings & Every LLP
(86) International application number: PCT/CN2021/095264
(87) International publication number: WO 2022/241774

(57) **Abstract**

This application provides an alternating current/direct current power conversion system, to adapt to an application scenario of different direct current voltages without changing an internal structure of the power conversion system. The system includes: a three-phase alternating current system port, configured to receive or output a three-phase alternating current; M direct current system ports, configured to separately receive or output a direct current, where M is an integer, and M≥2; and three power conversion modules, configured to separately receive or output one phase alternating current in the three-phase alternating current. Each power conversion module includes at least one power unit. Each power unit is configured to implement conversion and galvanic isolation between a single-phase alternating current and a direct current. Each power unit includes one alternating current port and M direct current ports. The alternating current ports of the at least one power unit are connected in series and then connected to the three-phase alternating current system port. The M direct current ports of each power unit are separately connected to the M direct current system ports.

## Description

### TECHNICAL FIELD

This application relates to the electrical field, and in particular, to an alternating current/direct current power conversion system.

### BACKGROUND

An AC/DC solid-state transformer may be an alternating current (alternating current, AC)/direct current (direct current, DC) power conversion system that uses high-frequency isolation, and is configured to convert an alternating current into a direct current. For example, a common alternating current/direct current power conversion system includes a medium-voltage alternating current/low-voltage direct current power conversion system, a low-voltage alternating current/low-voltage direct current power conversion system, and a low-voltage alternating current/medium-voltage direct current power conversion system. A typical application scenario is connecting an alternating current side to a three-phase alternating current power grid, and connecting a direct current side to a direct current power grid, a load, an energy storage device, or the like. In addition, the medium-voltage alternating current/low-voltage direct current power conversion system is used as an example. An additional low-voltage direct current/low-voltage alternating current power conversion stage may be added to the AC/DC solid-state transformer, to form an AC/AC solid-state transformer to connect to a low-voltage alternating current power grid.

Generally, each phase in the AC/DC solid-state transformer includes one or more power units. Input ends of the one or more power units are connected in series, and output ends of the plurality of power units are connected in parallel. Each power unit includes a high-voltage side power circuit, a medium frequency transformer, and a low-voltage side power circuit.

For example, the AC/DC solid-state transformer may be used in a medium-voltage alternating current/low-voltage direct current power conversion scenario of a front stage power conversion system of a data center and an electric vehicle charging station, to convert a medium-voltage alternating current into a low-voltage direct current for output. Generally, a voltage of the direct current output is a constant voltage, for example, 400 V or 800 V In application, an output of the AC/DC solid-state transformer may be connected to a plurality of types of devices, for example, may be connected to a next-stage DC/AC inverter or a next-stage DC/DC converter. However, in an existing solution, the voltage of the direct current output provided by the AC/DC solid-state transformer is fixed. In a scenario of different direct current voltages, the AC/DC solid-state transformer cannot adapt to the different direct current voltages by using a same power unit.

### SUMMARY

This application provides an alternating current/direct current power conversion system, to adapt to an application scenario of different direct current voltages without changing an internal structure of the power conversion system, thereby improving flexibility of the power conversion system.

According to a first aspect, an alternating current/direct current power conversion system is provided, including: a three-phase alternating current system port, configured to receive or output a three-phase alternating current; M direct current system ports, configured to separately receive or output a direct current, where M is an integer, and M≥2; and three power conversion modules, configured to separately receive or output one phase alternating current in the three-phase alternating current. Each power conversion module includes at least one power unit. Each power unit is configured to implement conversion and galvanic isolation between a single-phase alternating current and a direct current. Each power unit includes one alternating current port and M direct current ports. Alternating current ports of the at least one power unit are connected in series and then connected to the three-phase alternating current system port. The M direct current ports of each power unit are separately connected to the M direct current system ports.

Each power unit in the power conversion system has the M direct current ports separately connected to the M direct current system ports of the system. An external connection manner of the M direct current system ports of the power conversion system is configured, to dynamically support one or more direct current system ports and a plurality of direct current output voltages without changing an internal structure of the power conversion system, so that the power conversion system is adapted to an application scenario of different direct current voltages, thereby improving flexibility of the power conversion system.

With reference to the first aspect, in some implementations of the first aspect, a connection relationship between the M direct current system ports can be changed through cable connection configuration or switch switching.

The connection relationship between the M direct current system ports can be changed through cable connection configuration or external switch switching, to support the one or more direct current system ports and the plurality of direct current output voltages without changing the internal structure of the power conversion system, thereby improving flexibility of the power conversion system.

With reference to the first aspect, in some implementations of the first aspect, the M direct current system ports are configured to implement at least one of the following connection manners: the M direct current system ports are connected in parallel; the M direct current system ports are connected in series; the M direct current system ports are not connected to each other; a part of the M direct current system ports are connected in series; and a part of the M direct current system ports are connected in parallel.

With reference to the first aspect, in some implementations of the first aspect, a first power unit is any one of the plurality of power units, and the first power unit includes: an alternating current/direct current AC/DC front stage power converter, configured to implement conversion between an alternating current and a direct current; and M isolation direct current/direct current DC/DC post stage power converters, where each isolation DC/DC post stage power converter is configured to implement conversion and galvanic isolation between direct current voltages. An alternating current port of the AC/DC front stage power converter is connected to an alternating current port of the first power unit. First direct current ports of the M isolation DC/DC post stage power converters are connected in series or in parallel and are connected to a direct current port of the AC/DC front stage power converter. Second direct current ports of the M isolation DC/DC post stage power converters are separately connected to M direct current ports of the first power unit.

With reference to the first aspect, in some implementations of the first aspect, a first power unit is any one of the plurality of power units, and the first power unit includes: M alternating current/alternating current AC/AC front stage power converters, configured to implement voltage conversion between alternating currents, where first alternating current ports of the M AC/AC front stage power converters are connected in parallel and are connected to an alternating current port of the first power unit; M medium frequency transformers, where each medium frequency transformer includes a primary winding and a secondary winding, and second alternating current ports of the M AC/AC front stage power converters are separately connected to the primary windings of the M medium frequency transformers; and M AC/DC post stage power converters, configured to implement conversion between an alternating current and a direct current, where the secondary windings of the M medium frequency transformers are separately connected to alternating current ports of the M AC/DC post stage power converters, and direct current ports of the M AC/DC post stage power converters are separately connected to M direct current ports of the first power unit.

With reference to the first aspect, in some implementations of the first aspect, a first power unit is any one of the plurality of power units, and the first power unit includes: an AC/AC front stage power converter, configured to implement voltage conversion between alternating currents, where a first alternating current port of the AC/AC front stage power converter is connected to an alternating current port of the first power unit; M medium frequency transformers, where each medium frequency transformer includes a primary winding and a secondary winding, and the primary windings of the M medium frequency transformers are connected in parallel and are connected to a second alternating current port of the AC/AC front stage power converter; and M AC/DC post stage power converters, where the secondary windings of the M medium frequency transformers are separately connected to alternating current ports of the M AC/DC post stage power converters, and direct current ports of the M AC/DC post stage power converters are separately connected to M direct current ports of the first power unit.

With reference to the first aspect, in some implementations of the first aspect, a first power unit is any one of the plurality of power units, and the first power unit includes: an AC/AC front stage power converter, configured to implement voltage conversion between alternating currents, where a first alternating current port of the AC/AC front stage power converter is connected to an alternating current port of the first power unit; a medium frequency transformer, including one primary winding and M secondary windings, where the primary winding is connected to a second alternating current port of the AC/AC front stage power converter; and M AC/DC post stage power converters, where the M secondary windings are separately connected to alternating current ports of the M AC/DC post stage power converters, and direct current ports of the M AC/DC post stage power converters are separately connected to M direct current ports of the first power unit.

With reference to the first aspect, in some implementations of the first aspect, the AC/AC front stage power converter is a single-stage matrix converter or an AC/DC and DC/AC two-stage converter.

According to a second aspect, an alternating current/direct current power conversion system is provided, including: a three-phase alternating current system port, configured to receive or output a three-phase alternating current; M direct current system ports, configured to separately receive or output a direct current, where M is an integer, and M≥2; and a power unit, configured to implement conversion and galvanic isolation between the three-phase alternating current and the direct current. The power unit includes: an alternating current/direct current AC/DC front stage power converter, configured to implement conversion between a three-phase alternating current and a direct current, where the AC/DC front stage power converter includes a three-phase alternating current port and a direct current port, and the three-phase alternating current port is connected to the three-phase alternating current system port; and M isolation direct current/direct current DC/DC post stage power converters, where each isolation DC/DC post stage power converter is configured to implement conversion and galvanic isolation between direct current voltages. First direct current ports of the M isolation DC/DC post stage power converters are connected in series or in parallel and are connected to the direct current port of the AC/DC front stage power converter. Second direct current ports of the M isolation DC/DC post stage power converters are separately connected to the M direct current system ports.

The power conversion system includes one power unit. M direct current ports included in the power unit are connected to the M direct current system ports in the power conversion system. A connection manner of a direct current side outside the alternating current/direct current power conversion system is configured, to dynamically support one or more direct current system ports and a plurality of direct current output voltages without changing an internal structure of the power conversion system, so that the power conversion system is adapted to application scenarios of different direct current voltages, thereby improving flexibility of the power conversion system.

With reference to the second aspect, in a possible implementation, a connection relationship between the M direct current system ports can be changed through cable connection configuration or switch switching.

With reference to the second aspect, in a possible implementation, the M direct current system ports are configured to implement at least one of the following connection manners: the M direct current system ports are connected in parallel; the M direct current system ports are connected in series; the M direct current system ports are not connected to each other; a part of the M direct current system ports are connected in series; and a part of the M direct current system ports are connected in parallel.

### BRIEF DESCRIPTION OF DRAWINGS

FIG. 1 is a schematic diagram of a structure of an alternating current/direct current power conversion system 100 according to an embodiment of this application;
FIG. 2 is a schematic diagram of a structure of a power conversion module 120 according to an embodiment of this application;
FIG. 3 is a schematic diagram of a structure of a power unit 121 according to an embodiment of this application;
FIG. 4 is a schematic diagram of a structure of a power unit 121 according to an embodiment of this application;
FIG. 5 is a schematic diagram of a structure of a power unit 121 according to an embodiment of this application;
FIG. 6 is a schematic diagram of a structure of a power unit 121 according to an embodiment of this application;
FIG. 7 is a schematic diagram of a structure of a power unit 121 according to an embodiment of this application; and
FIG. 8 is a schematic diagram of a structure of an alternating current/direct current power conversion system 200 according to an embodiment of this application.

### DESCRIPTION OF EMBODIMENTS

The following describes the technical solutions of this application with reference to the accompanying drawings.

An AC/DC solid-state transformer (solid-state transformer, SST) is an alternating current/direct current power conversion system that uses high-frequency isolation. Typical application is a medium-voltage alternating current/low-voltage direct current power conversion scenario. Generally, an alternating current side is connected to a three-phase alternating current power grid; and a direct current side is connected to a direct current power grid, or is connected to an alternating current power grid after direct current/alternating current conversion is performed, or may be connected to a load, an energy storage device, or the like.

Input series output parallel (input series output parallel, ISOP) means that a plurality of power units in a power conversion system are connected in series at an input end and connected in parallel at an output end.

Medium frequency transformer (medium frequency transformer, MFT) is usually a transformer whose frequency ranges from tens of kilohertz to hundreds of kilohertz, or a transformer whose operating frequency is higher than a power grid frequency. For example, the power grid frequency is usually 50 Hz or 60 Hz. In some special scenarios, for example, the frequency is 50 Hz or 3 Hz in a railway traction scenario. In this embodiment of this application, the medium frequency transformer is mainly configured to implement galvanic isolation and voltage adjustment between an alternating current side and a direct current side.

A matrix converter is a direct-conversion AC/AC power conversion apparatus with a matrix topology structure. The matrix converter does not need an intermediate direct current energy storage process, and can freely control a power factor. The matrix converter includes a single-stage matrix converter and a two-stage matrix converter.

As described above, in an existing solution, an output end of the AC/DC solid-state transformer cannot adapt to different direct current voltages. To resolve this problem, an embodiment of this application provides an alternating current/direct current power conversion system with high-frequency electrical isolation, so that a mode of an output direct current voltage can be dynamically adjusted to adapt to different application scenarios, thereby improving application flexibility of the power conversion system.

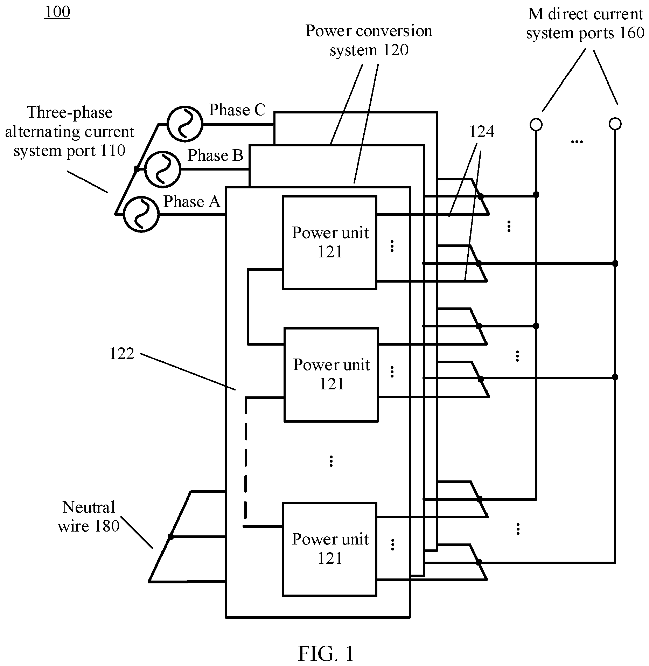

FIG. 1 is a schematic diagram of a structure of an alternating current/direct current power conversion system 100 according to an embodiment of this application. As shown in FIG. 1, the power conversion system 100 includes a three-phase alternating current system port 110, M direct current system ports 160, and three power conversion modules 120. The three-phase alternating current system port 110 is configured to receive or output a three-phase alternating current. The M direct current system ports 160 are configured to separately receive or output a direct current, where M is an integer, and M≥2. The three power conversion modules 120 are in a one-to-one correspondence with three phases of the three-phase alternating current, and are configured to separately receive or output one phase of the three-phase alternating current.

It should be understood that the power conversion system 100 may implement conversion for alternating currents of different voltages and direct currents of different voltages. For example, the power conversion system 100 may include but is not limited to the following systems: a medium-voltage alternating current/low-voltage direct current power conversion system, a low-voltage alternating current/low-voltage direct current power conversion system, a low-voltage alternating current/medium-voltage direct current power conversion system, and a high-voltage alternating current/medium-voltage direct current power conversion system.

In some examples, the three-phase alternating current system port 110 has a three-phase three-wire structure. To be specific, three terminals are led out from the three-phase alternating current system port 110, and the three terminals each are configured to receive or output one phase of the three-phase alternating current. In this embodiment of this application, the three-phase three-wire structure is used as an example for description. Optionally, the three-phase alternating current system port 110 may alternatively use a three-phase four-wire structure or a three-phase five-wire structure. The three-phase four-wire structure further includes a fourth terminal configured to connect a neutral wire. The three-phase five-wire structure further includes a fifth terminal configured to connect to a protective ground cable.

Each power conversion module 120 includes at least one power unit 121. Each power unit 121 is configured to implement conversion and galvanic isolation between a single-phase alternating current and a direct current. Each power unit 121 includes one alternating current port 122 and M direct current ports 124. The alternating current ports 122 of the at least one power unit 121 are connected in series and then connected to the three-phase alternating current system port 110. The M direct current ports 124 of each power unit 121 are separately connected to the M direct current system ports 160.

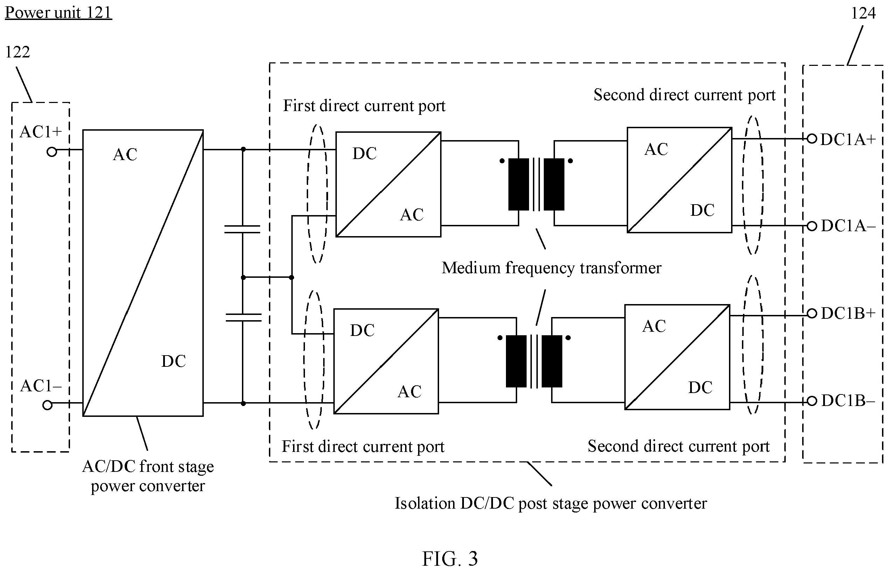

Optionally, the power unit 121 in this embodiment of this application includes a plurality of implementations, provided that the power unit 121 can implement a conversion function, a voltage conversion function, and a galvanic isolation function between an alternating current and a direct current. The following describes in detail a specific implementation form of the power unit 121 with reference to FIG. 3 to FIG. 7.

In this embodiment of this application, the alternating current/direct current power conversion system with high-frequency electrical isolation is provided. Each power unit in the power conversion system has the M direct current ports separately connected to the M direct current system ports of the system. A connection manner of a direct current side outside the alternating current/direct current power conversion system is configured, to dynamically support one or more direct current system ports and a plurality of direct current output voltages without changing an internal structure of the power conversion system, so that the power conversion system is adapted to an application scenario of different direct current voltages, thereby improving flexibility of the power conversion system.

In some examples, a connection relationship between the M direct current system ports 160 can be changed through cable connection configuration or external switch switching. In other words, a person skilled in the art may change, based on an application environment, a magnitude of a direct current voltage output by the power conversion system 100 or a quantity of direct current voltage output ports by changing the connection relationship between the M direct current system ports 160.

The connection relationship between the M direct current system ports can be changed through cable connection configuration or external switch switching, to support the one or more direct current system ports and the plurality of direct current output voltages without changing the internal structure of the power conversion system, thereby improving flexibility of the power conversion system.

For example, the M direct current system ports 160 are configured to implement at least one of the following connection manners: the M direct current system ports 160 are connected in parallel; the M direct current system ports 160 are connected in series; the M direct current system ports 160 are not connected to each other; a part of the M direct current system ports 160 are connected in series; and a part of the M direct current system ports 160 are connected in parallel.

It should be understood that a single-phase alternating current port or the direct current port in this embodiment of this application usually includes a pair of terminals, namely, a positive terminal and a negative terminal. For example, each alternating current port 122 includes a positive terminal and a negative terminal, and each direct current port 124 and each direct current system port 160 also each include a positive terminal and a negative terminal.

It should be understood that a quantity of power units 121 in each of the three power conversion modules 120 may be the same or may be different. This is not limited in this embodiment of this application.

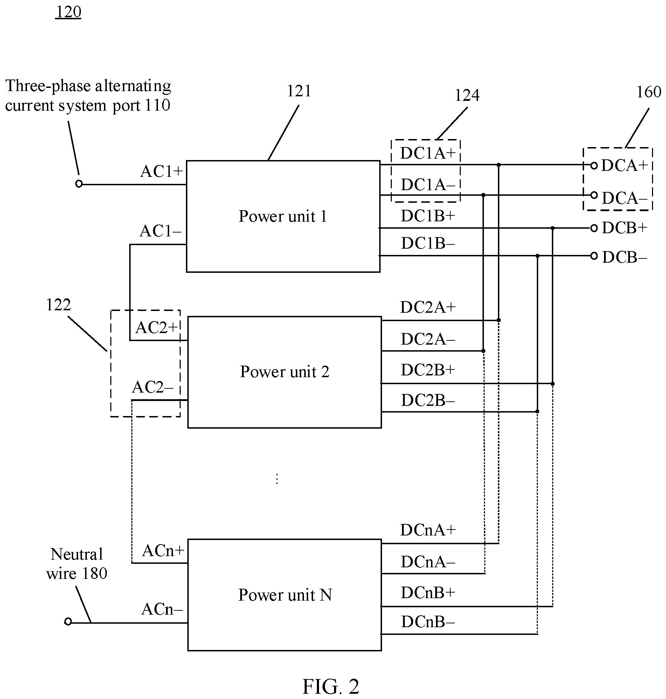

FIG. 2 is a schematic diagram of a structure of a power conversion module 120 according to an embodiment of this application. FIG. 2 is described by using an example in which the power conversion system 100 includes two direct current system ports 160, and each power unit 121 includes two direct current ports 124. In other words, M=2. As shown in FIG. 2, the power conversion module 120 includes N power units 121. Each power unit 121 includes one alternating current port 122 and two direct current ports 124.

Alternating current ports 122 of the N power units 121 are connected in series, and are connected to the three-phase alternating current system port 110. To be specific, an alternating current negative terminal of each power unit 121 is connected to an alternating current positive terminal of a next power unit, and an alternating current positive terminal of a first power unit (namely, a power unit 1) is connected to the three-phase alternating current system port. An alternating current negative terminal of an N^{th} power unit (namely, a power unit N) is connected to a neutral wire. The neutral wire is configured to connect to the three power conversion modules 120.

In FIG. 2, the two direct current system ports 160 may be respectively represented as (DCA+, DCA-) and (DCB+, DCB-). The direct current ports 124 in the N power units 121 may be separately represented as (DC1A+, DC1A-), (DC1B+, DC1B-), ..., (DCnA+, DCnA-), and (DCnB+, DCnB-). First direct current ports (DC1A+, DC1A-), ..., (DCnA+, DCnA-) in the power units 121 are connected in parallel and are connected to a first direct current system port (DCA+, DCA-). Second direct current ports (DC1B+, DC1B-), ..., (DCnB+, DCnB-) in the power units 121 are connected in parallel and are connected to a second direct current system port (DCB+, DCB-). Herein, N=n.

For example, according to requirements of different application scenarios, copper bar or cable connections of the two direct current system ports may be adjusted to form the following connection manners:
(1) Parallel connection: DCA+ is connected to DCB+, and DCA- is connected to DCB-, to form one group of direct current buses.
(2) Serial connection: DCA- is connected to DCB+, and DCA+ and DCB- serve as output terminals, to form one direct current bus.
(3) Not connected: DCA+ and DCA-, and DCB+ and DCB- form two direct current buses.

In this embodiment of this application, the direct current side of the power conversion system may provide at least two different direct current voltage ports, and may provide more ports and support more direct current voltages through expansion. According to requirements of an application scenario, a needed port voltage may be obtained through adjustment by configuring a connection manner of the direct current ports of the power units, to adapt to an application scenario in which different direct current voltages are needed, thereby improving flexibility of the power conversion system.

The following describes the plurality of implementations of the power unit 121 in this embodiment of this application with reference to the accompanying drawings.

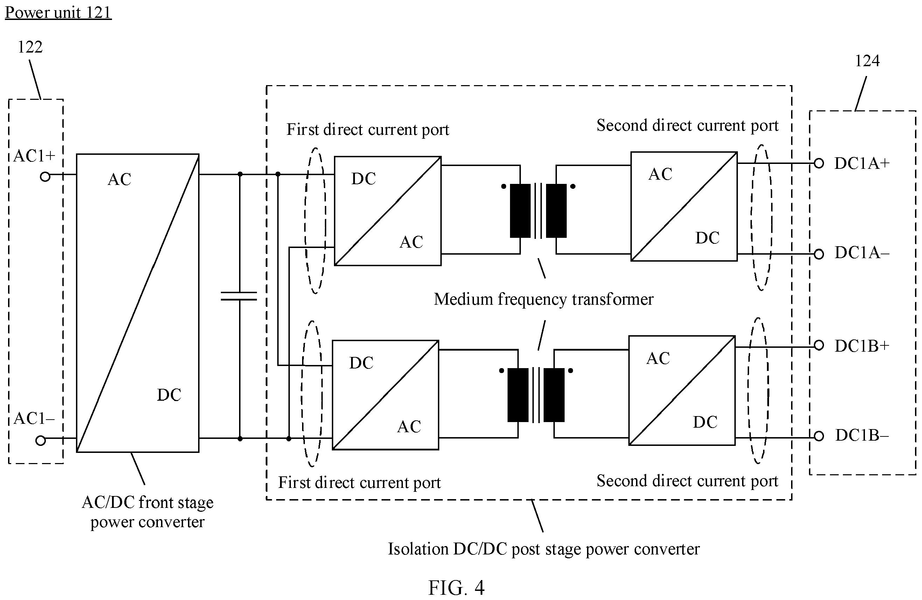

FIG. 3 and FIG. 4 each are a schematic diagram of a structure of a power unit 121 according to an embodiment of this application. As shown in FIG. 3 and FIG. 4, the power unit 121 includes an AC/DC front stage power converter and M isolation DC/DC post stage power converters. In FIG. 3 and FIG. 4, M=2 is used as an example for description.

The AC/DC front stage power converter is configured to implement conversion between an alternating current and a direct current. The isolation DC/DC post stage power converter is configured to implement conversion and galvanic isolation between direct current voltages. An alternating current port of the AC/DC front stage power converter is connected to the alternating current port 122 of the power unit. First direct current ports of the M isolation DC/DC post stage power converters are connected in series or in parallel and are connected to a direct current port of the AC/DC front stage power converter. For example, the first direct current ports of the M isolation DC/DC post stage power converters are connected in series in FIG. 3. The first direct current ports of the M isolation DC/DC post stage power converters are connected in parallel in FIG. 4. Second direct current ports of the M isolation DC/DC post stage power converters are separately connected to the M direct current ports 124 of the first power unit.

As shown in FIG. 3 and FIG. 4, for example, the isolation DC/DC post stage power converter may include a DC/AC converter, a medium frequency transformer, and an AC/DC converter. The medium frequency transformer is configured to implement galvanic isolation between voltages on two sides.

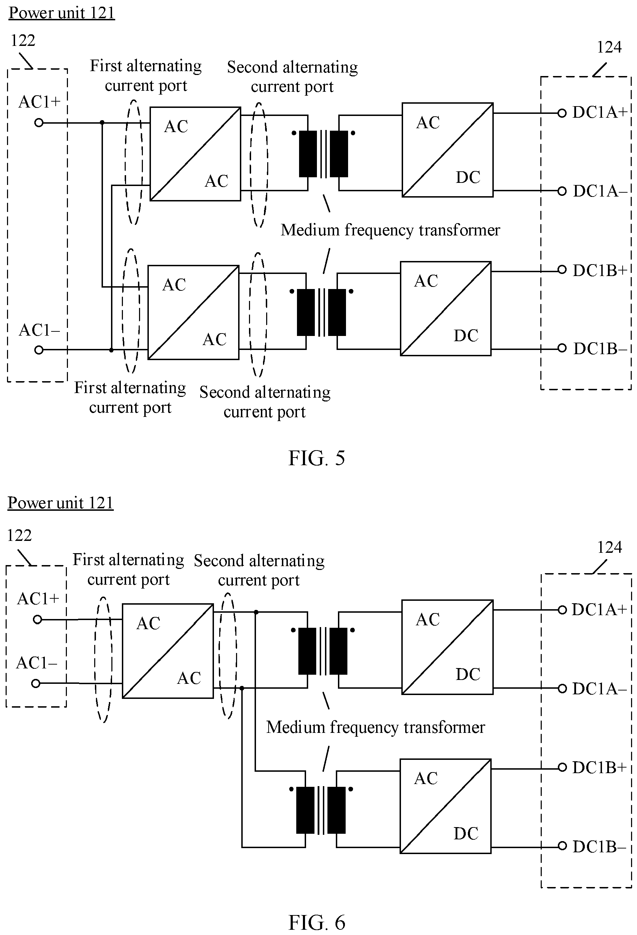

FIG. 5 is a schematic diagram of a structure of a power unit 121 according to another embodiment of this application. As shown in FIG. 5, the power unit 121 includes: M AC/AC front stage power converters, M medium frequency transformers, and M AC/DC post stage power converters. In FIG. 5, M=2 is used as an example for description.

The M AC/AC front stage power converters are configured to implement voltage conversion between alternating currents. First alternating current ports of the M AC/AC front stage power converters are connected in parallel and are connected to an alternating current port 122 of the power unit 121.

The M medium frequency transformers are configured to implement galvanic isolation. Each medium frequency transformer includes a primary winding and a secondary winding. Second alternating current ports of the M AC/AC front stage power converters are separately connected to the primary windings of the M medium frequency transformers.

The M AC/DC post stage power converters are configured to implement conversion between an alternating current and a direct current. The secondary windings of the M medium frequency transformers are separately connected to alternating current ports of the M AC/DC post stage power converters. Direct current ports of the M AC/DC post stage power converters are separately connected to the M direct current ports of the power unit 121.

For example, the AC/AC front stage power converter may be a single-stage matrix converter or an AC/DC and DC/AC two-stage converter.

FIG. 6 is a schematic diagram of a structure of a power unit 121 according to still another embodiment of this application. As shown in FIG. 6, the power unit 121 includes: an AC/AC front stage power converter, M medium frequency transformers, and M AC/DC post stage power converters. In FIG. 6, M=2 is used as an example for description.

The AC/AC front stage power converter is configured to implement voltage conversion between alternating currents. A first alternating current port of the AC/AC front stage power converter is connected to the alternating current port 122 of the power unit 121.

Each of the M medium frequency transformers includes a primary winding and a secondary winding. The primary windings of the M medium frequency transformers are connected in parallel and are connected to a second alternating current port of the AC/AC front stage power converter.

The secondary windings of the M medium frequency transformers are separately connected to alternating current ports of the M AC/DC post stage power converters. Direct current ports of the M AC/DC post stage power converters are separately connected to M direct current ports of the first power unit.

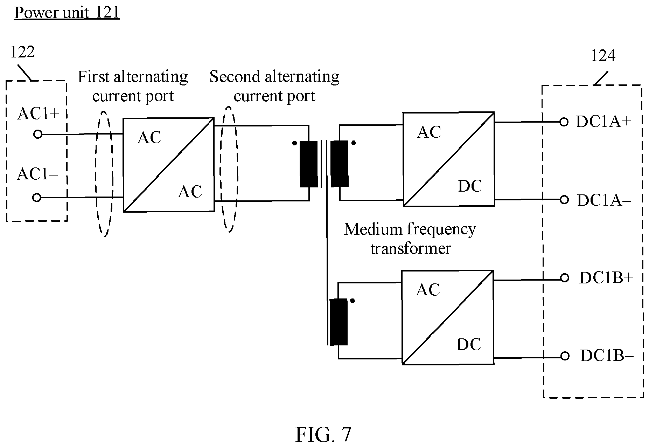

FIG. 7 is a schematic diagram of a structure of a power unit 121 according to yet another embodiment of this application. As shown in FIG. 7, the power unit 121 includes: an AC/AC front stage power converter, a medium frequency transformer, and M AC/DC post stage power converters. In FIG. 7, M=2 is used as an example for description.

The AC/AC front stage power converter is configured to implement voltage conversion between alternating currents. A first alternating current port of the AC/AC front stage power converter is connected to the alternating current port 122 of the power unit 121.

The medium frequency transformer includes one primary winding and M secondary windings. The primary winding is connected to a second alternating current port of the AC/AC front stage power converter. The M secondary windings of the medium frequency transformer are separately connected to alternating current ports of the M AC/DC post stage power converters. Direct current ports of the M AC/DC post stage power converters are separately connected to the M direct current ports of the power unit 124.

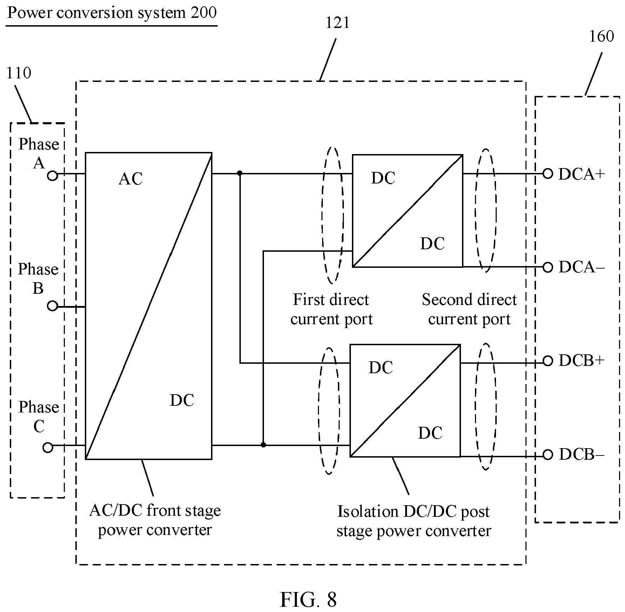

The power conversion system 100 in FIG. 1 to FIG. 7 includes the three power conversion modules 120 that each process one phase of a three-phase alternating current. Optionally, an embodiment of this application further provides an alternating current/direct current power conversion system. In the power conversion system, one separate power unit processes a three-phase alternating current. In addition, the power conversion system may also implement functions of the power conversion system 100 in FIG. 1 to FIG. 7, namely, dynamically support one or more direct current system ports and a plurality of direct current output voltages. The following describes the power conversion system with reference to FIG. 8.

FIG. 8 is a schematic diagram of a structure of an alternating current/direct current power conversion system 200 according to still yet another embodiment of this application. As shown in FIG. 8, the power conversion system 200 includes:
a three-phase alternating current system port 110, configured to receive or output a three-phase alternating current; and
M direct current system ports 160, configured to separately receive or output a direct current, where M is an integer, and M≥2. In FIG. 8, M=2 is used as an example for description.

A power unit 121 is configured to implement conversion and galvanic isolation between the three-phase alternating current and the direct current. The power unit 121 includes an AC/DC front stage power converter and M isolation DC/DC post stage power converters.

The AC/DC front stage power converter is configured to implement conversion between the three-phase alternating current and the direct current. The AC/DC front stage power converter includes a three-phase alternating current port and a direct current port. The three-phase alternating current port is connected to the three-phase alternating current system port. In other words, the three-phase alternating current port and a three-phase medium-voltage alternating current port are a same port.

Each of the M isolation DC/DC downstream converters is configured to implement galvanic isolation and conversion between direct current voltages. First direct current ports of the M isolation DC/DC downstream converters are connected in series or in parallel and are connected to a direct current port of the AC/DC front stage power converter. In FIG. 8, an example in which the first direct current ports of the M isolation DC/DC post stage power converters are connected in parallel is used for description. Second direct current ports of the M isolation DC/DC post stage power converters are separately connected to the M direct current system ports 160.

In this embodiment of this application, the alternating current/direct current power conversion system is provided. The power conversion system includes one power unit. M direct current ports included in the power unit are connected to M direct current system ports in the power conversion system. A connection manner of a direct current side outside the alternating current/direct current power conversion system is configured, to dynamically support one or more direct current system ports and a plurality of direct current output voltages without changing an internal structure of the power conversion system, so that the power conversion system is adapted to an application scenario of different direct current voltages.

Similar to the power conversion system 100, in some examples, a connection relationship between the M direct current system ports 160 canbe changed through cable connection configuration or external switch switching. In other words, a person skilled in the art may change, based on an application environment, a magnitude of a direct current voltage output by the power conversion system 100 or a quantity of direct current voltage output ports by changing the connection relationship between the M direct current system ports 160.

For example, the M direct current system ports 160 are configured to implement at least one of the following connection manners: the M direct current system ports 160 are connected in parallel; the M direct current system ports 160 are connected in series; the M direct current system ports 160 are not connected to each other; a part of the M direct current system ports 160 are connected in series; and a part of the M direct current system ports 160 are connected in parallel.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or parts contributing to the conventional technologies, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing description is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An alternating current/direct current power conversion system, wherein the system comprises:
a three-phase alternating current system port, configured to receive or output a three-phase alternating current;
M direct current system ports, configured to separately receive or output a direct current, wherein M is an integer, and M≥2; and
three power conversion modules, configured to separately receive or output one phase alternating current in the three-phase alternating current, wherein each power conversion module comprises:
at least one power unit, wherein each power unit is configured to implement conversion and galvanic isolation between a single-phase alternating current and a direct current, each power unit comprises one alternating current port and M direct current ports, the alternating current ports of the at least one power unit are connected in series and then connected to the three-phase alternating current system port, and the M direct current ports in each power unit are separately connected to the M direct current system ports.

2. The system according to claim 1, wherein a connection relationship between the M direct current system ports can be changed through cable connection configuration or switch switching.

3. The system according to claim 1 or 2, wherein the M direct current system ports are configured to implement at least one of the following connection manners:
the M direct current system ports are connected in parallel;
the M direct current system ports are connected in series;
the M direct current system ports are not connected to each other;
a part of the M direct current system ports are connected in series; and
a part of the M direct current system ports are connected in parallel.

4. The system according to any one of claims 1 to 3, wherein a first power unit is any one of the plurality of power units, and the first power unit comprises:
an alternating current/direct current AC/DC front stage power converter, configured to implement conversion between an alternating current and a direct current; and
M isolation direct current/direct current DC/DC post stage power converters, wherein each isolation DC/DC post stage power converter is configured to implement conversion and galvanic isolation between direct current voltages, and
an alternating current port of the AC/DC front stage power converter is connected to an alternating current port of the first power unit, first direct current ports of the M isolation DC/DC post stage power converters are connected in series or in parallel and are connected to a direct current port of the AC/DC front stage power converter, and second direct current ports of the M isolation DC/DC post stage power converters are separately connected to M direct current ports of the first power unit.

5. The system according to any one of claims 1 to 3, wherein a first power unit is any one of the plurality of power units, and the first power unit comprises:
M alternating current/alternating current AC/AC front stage power converters, configured to implement voltage conversion between alternating currents, wherein first alternating current ports of the M AC/AC front stage power converters are connected in parallel and are connected to an alternating current port of the first power unit;
M medium frequency transformers, wherein each medium frequency transformer comprises a primary winding and a secondary winding, and second alternating current ports of the M AC/AC front stage power converters are separately connected to the primary windings of the M medium frequency transformers; and
M AC/DC post stage power converters, configured to implement conversion between an alternating current and a direct current, wherein the secondary windings of the M medium frequency transformers are separately connected to alternating current ports of the M AC/DC post stage power converters, and direct current ports of the M AC/DC post stage power converters are separately connected to M direct current ports of the first power unit.

6. The system according to any one of claims 1 to 3, wherein a first power unit is any one of the plurality of power units, and the first power unit comprises:
an AC/AC front stage power converter, configured to implement voltage conversion between alternating currents, wherein a first alternating current port of the AC/AC front stage power converter is connected to an alternating current port of the first power unit;
M medium frequency transformers, wherein each medium frequency transformer comprises a primary winding and a secondary winding, and the primary windings of the M medium frequency transformers are connected in parallel and are connected to a second alternating current port of the AC/AC front stage power converter; and
M AC/DC post stage power converters, wherein the secondary windings of the M medium frequency transformers are separately connected to alternating current ports of the M AC/DC post stage power converters, and direct current ports of the M AC/DC post stage power converters are separately connected to M direct current ports of the first power unit.

7. The system according to any one of claims 1 to 3, wherein a first power unit is any one of the plurality of power units, and the first power unit comprises:
an AC/AC front stage power converter, configured to implement voltage conversion between alternating currents, wherein a first alternating current port of the AC/AC front stage power converter is connected to an alternating current port of the first power unit;
a medium frequency transformer, comprising one primary winding and M secondary windings, wherein the primary winding is connected to a second alternating current port of the AC/AC front stage power converter; and
M AC/DC post stage power converters, wherein the M secondary windings are separately connected to alternating current ports of the M AC/DC post stage power converters, and direct current ports of the M AC/DC post stage power converters are separately connected to M direct current ports of the first power unit.

8. The system according to any one of claims 5 to 7, wherein the AC/AC front stage power converter is a single-stage matrix converter or an AC/DC and DC/AC two-stage converter.

9. An alternating current/direct current power conversion system, wherein the system comprises:
a three-phase alternating current system port, configured to receive or output a three-phase alternating current;
M direct current system ports, configured to separately receive or output a direct current, wherein M is an integer, and M≥2; and
a power unit, configured to implement conversion and galvanic isolation between the three-phase alternating current and the direct current, wherein the power unit comprises:
an alternating current/direct current AC/DC front stage power converter, configured to implement conversion between a three-phase alternating current and a direct current, wherein the AC/DC front stage power converter comprises a three-phase alternating current port and a direct current port, and the three-phase alternating current port is connected to the three-phase alternating current system port; and
M isolation direct current/direct current DC/DC post stage power converters, wherein each isolation DC/DC post stage power converter is configured to implement conversion and galvanic isolation between direct current voltages, first direct current ports of the M isolation DC/DC post stage power converters are connected in series or in parallel and are connected to the direct current port of the AC/DC front stage power converter, and second direct current ports of the M isolation DC/DC post stage power converters are separately connected to the M direct current system ports.

10. The system according to claim 9, wherein a connection relationship between the M direct current system ports can be changed through cable connection configuration or switch switching.

11. The system according to claim 9 or 10, wherein the M direct current system ports are configured to implement at least one of the following connection manners:
the M direct current system ports are connected in parallel;
the M direct current system ports are connected in series;
the M direct current system ports are not connected to each other;
a part of the M direct current system ports are connected in series; and
a part of the M direct current system ports are connected in parallel.
